# EUROPEAN PATENT SPECIFICATION

(11) **EP 1 145 622 B1**
(45) Date of publication and mention of the grant of the patent: **26.07.2006**
(21) Application number: 01303435.0
(22) Date of filing: 12.04.2001
(51) Int. Cl.: A01G 7/04, F21V 13/10, F21V 11/14, F21V 7/00

(54) **Shielding device**
Lichtabschirmungsvorrichtung
Dispositif obturateur de lumière

(30) Priority: 13.04.2000 US 548862
(43) Date of publication of application: 17.10.2001
(73) Proprietor: Cronk, Paul Andrew, Harbord, New South Wales 2096 (AU)
(72) Inventor: Cronk, Paul Andrew, Harbord, New South Wales 2096 (AU)
(74) Representative: Asquith, Julian Peter

(56) References cited:
- WO-A-96/37732
- DE-A- 2 502 361
- DE-A- 4 233 930
- FR-A- 604 343
- US-A- 3 860 903

## Description

The present invention relates to luminaires and, in particular, to luminaires having a heat shield.

Many different types of luminaires are known and in general these take the form of a light source, and a reflector for that light source. Different types of reflectors are known according to the purpose to which the luminaire is intended to be put and the shape of the light source.

The particular fields in which luminaires find a substantial market include the field of hydroponics and the field of indoor horticulture where plants of various types are grown indoors under artificial lighting. In general it is desirable to make the lighting as intense as possible and since the intensity of light decreases in accordance with an inverse square law as the distance from the light source increases, this generally requires that the luminaire should be closely spaced from the plant, if possible. Since all light sources, including gas discharge tubes, generate heat as well as light, placing the luminaire close to the plant can damage the plant by subjecting it to excess heat.

US Patent No. 6,053,624 (WO 96/37732) discloses a commercially successful luminaire having a reflector which is adjustable to adjust the focus and direction of the reflected light. That luminaire operates with an elongate gas discharge tube and in hydroponics applications is fitted with an elongated strip shielding device which has an inverted v-shape when viewed in cross-section. The V-shape re-directs the emissions of the light source in two directions.

US Patent No. 5,249,110 (Russello et al) at Fig. 2. discloses a generally flat sieve reflector 58 which includes heat sink fins. That so-called "reflector" functions to block some, but not all, of the emissions from the light source but does not divert them. Instead, the heat blocked is absorbed by the reflector 58.

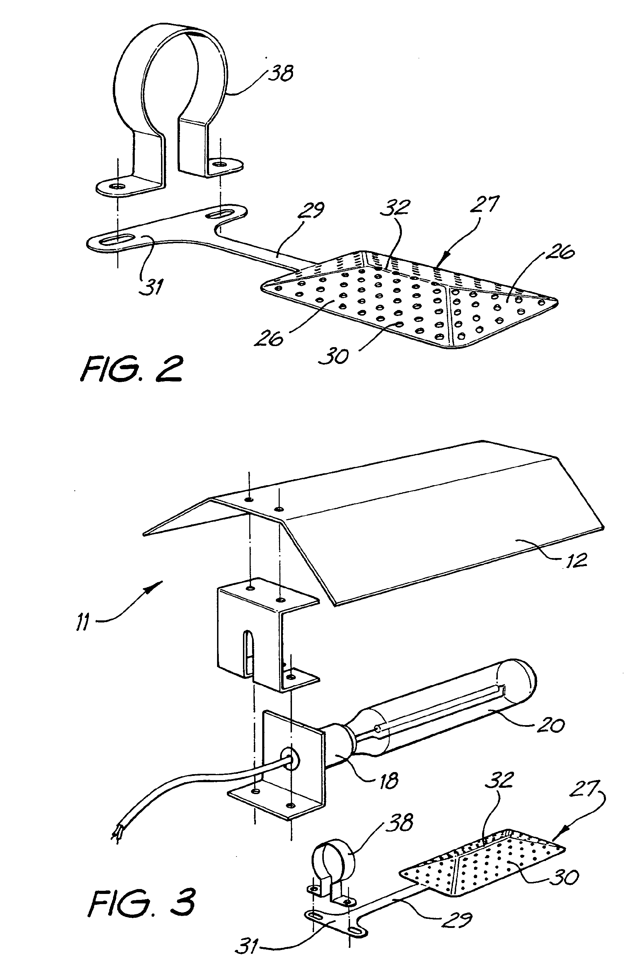

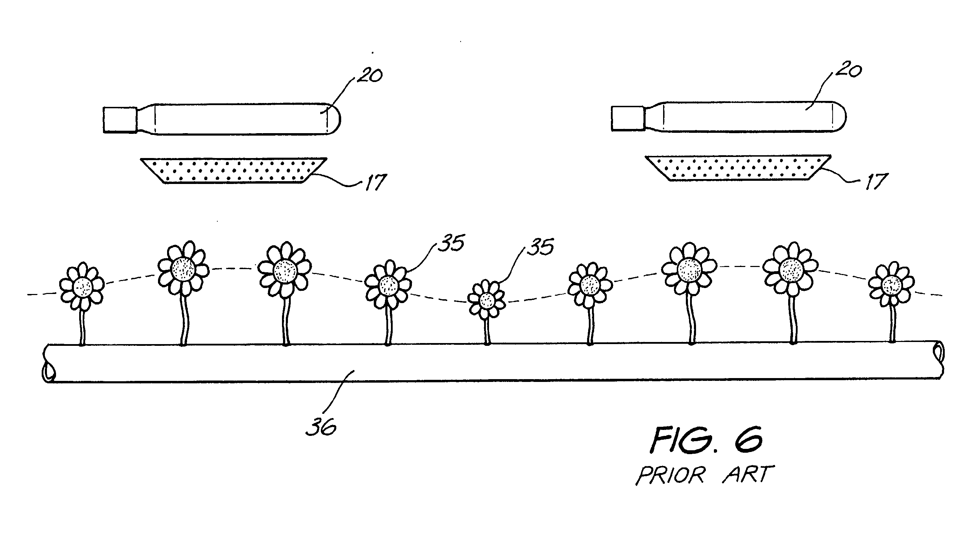

FR-A-604,343 discloses a lamp (16) with a hemispherical reflector having roofs 4. A reflector screen (6, 19) which is placed below the point source lamp (16) reflects light (rays P₁, P₂ of Fig. 3) from the reflector screen 6 back into the roof 4 for subsequent reflection. Also rays such as S₁, S₂ of Fig. 3 are directly reflected from the reflecting screen (6, 16). No light passes through the reflector screen (6, 16) thereby creating a region of diminished light intensity immediately below the reflector screen (6, 16). The reflector screen (6a, Fig. 6) reflects equally in four directions aligned with the corresponding four roofs (4, 4a).

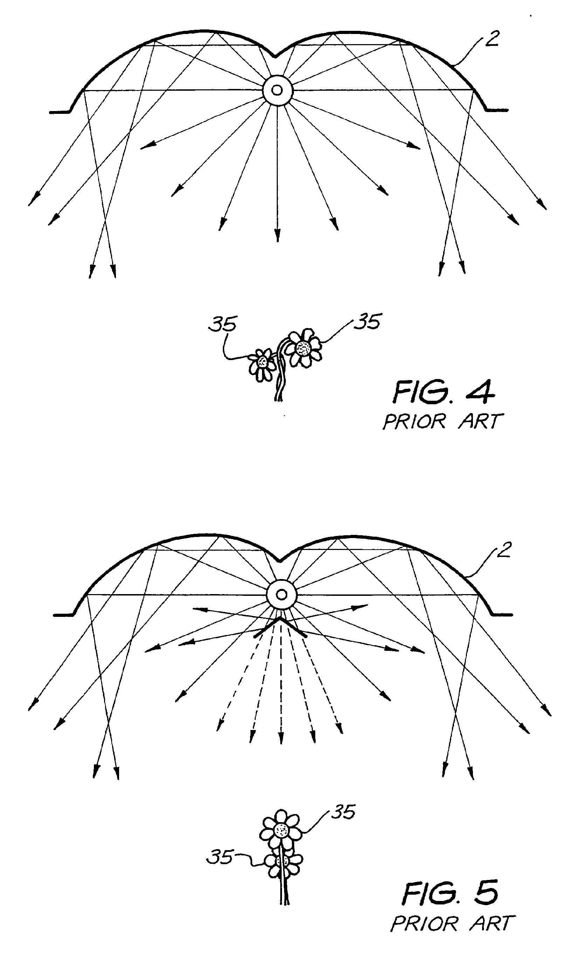

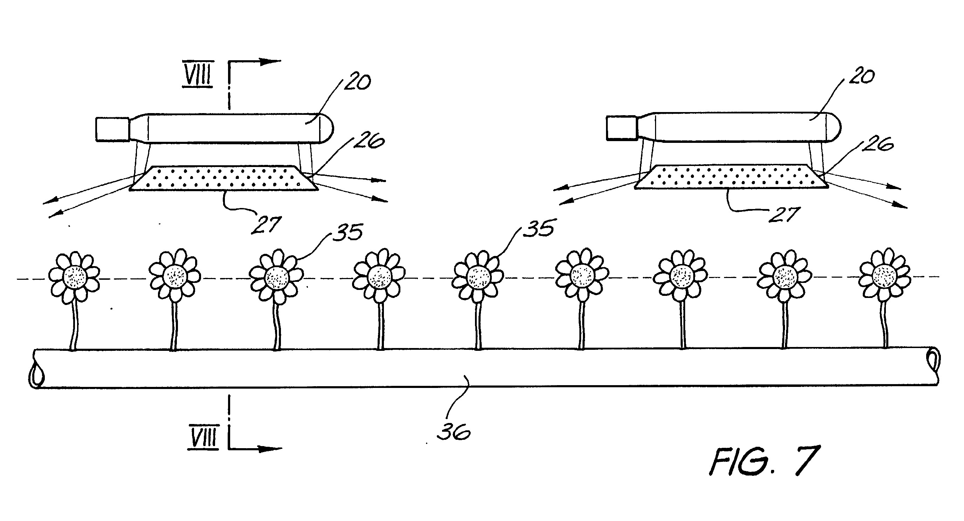

DE-A-42 33 930 discloses a light 100 with deflecting mirrors (18, 20, 36, 146, 148) which are arranged to deflect light sideways in order to intensely illuminate an object or area with deflected light. In particular the deflecting mirrors do not permit light to pass through the mirrors. A shining central region (174) having a surrounding matt region (176) is disclosed in Fig. 4. Thus as indicated by ray (50) in Fig. 7, there is a region of diminished light intensity immediately below the deflecting mirrors.

US-A-3 860 903 discloses a ventilated luminaires 10 with a perforated air diverting reflector 32 and a perforated light screen 34. The reflector 32 directs a cooling air flow whilst the screen 34 prevents the arc of the discharge lamps 24 from being seen. The screen 34 reflects light from the lamps 24 in two directions only and is substantially longer than the axial length of each lamp 24. The ventilated luminaire 10 uses movable louvres or baffles (38, 42) to direct the light emerging from the luminaire.

The object of the present invention is to improve the performance of luminaires by providing an improved heat shielding device.

In accordance with a first aspect of the present invention there is disclosed a heat shield for an elongate luminaire having an elongate reflector closely adjacent which an aligned elongate light and heat emitting source is mounted, said heat shield having mounting means to mount same closely adjacent to said source, being elongate, being aligned with said reflector and source, being substantially V-shaped in transverse cross-section and being perforated to deflect only some of the emissions of said source, characterised in that said heat shield has an axial length which is shorter than the axial axial length of said reflector, and has two end surfaces inclined towards each other and located at opposite axial ends of said shield whereby said heat shield re-directs some only of said emissions in four directions and an illuminated object aligned with said reflector, source and heat shield is partially shielded from the emissions of said source.

In accordance with a second aspect of the present invention there is disclosed a plurality of aligned elongate luminaires each having an elongate reflector and each having an elongate light and heat emitting source which is mounted closely adjacent to, and aligned with, the corresponding reflector, characterised in that each of said luminaires has a heat shield as above aligned with the corresponding reflector and source whereby illuminated objects aligned with a pair of said luminaires and located intermediate each luminaire of said pair, receive re-directed emissions from the adjacent ones of said end surfaces.

In accordance with a third aspect of the present invention there is disclosed a method of substantially uniforming illuminating objects grown in at least one row, said method comprising the steps of aligning a plurality of elongate luminaires each having an elongate reflector and each having an elongate light and heat emitting source which is mounted closely adjacent to, and aligned with, the corresponding reflector, and positioning said aligned luminaires above said one row, characterised in that each of said luminaires has a heat shield as above aligned with the corresponding reflector and source whereby said illuminated objects intermediate the luminaires of each pair of said luminaires receive re-directed emissions from the adjacent ones of said end surfaces.

One embodiment of the present invention will now be described with reference to the drawings in which:
Fig 1 is an exploded perspective view of the abovementioned prior art luminaire and effectively reproduces one of the drawings for the first abovementioned US patent,
Fig 2 is an exploded perspective view of the heat shield of the preferred embodiment,
Fig 3 is an exploded perspective view of the luminaire having a reflector different from that of Fig 1 but being provided with the heat shield of Fig 2.
Fig 4 is a schematic transverse cross-sectional view through a luminaire having the reflector of Fig 1 but no heat shield,
Fig 5 is a view similar to Fig 4 but illustrating the action of the heat shield of Fig 1,
Fig 6 is a schematic side view of one pipe (or row) of a hydroponic installation having a plurality of in-line prior art luminaires,
Fig 7 is a view similar to Fig 6 but illustrating the result with luminaries having the heat shield of Fig 2 or 3, and
Fig 8 is a transverse cross-sectional view taken along the line VIII-VIII of Fig 7.

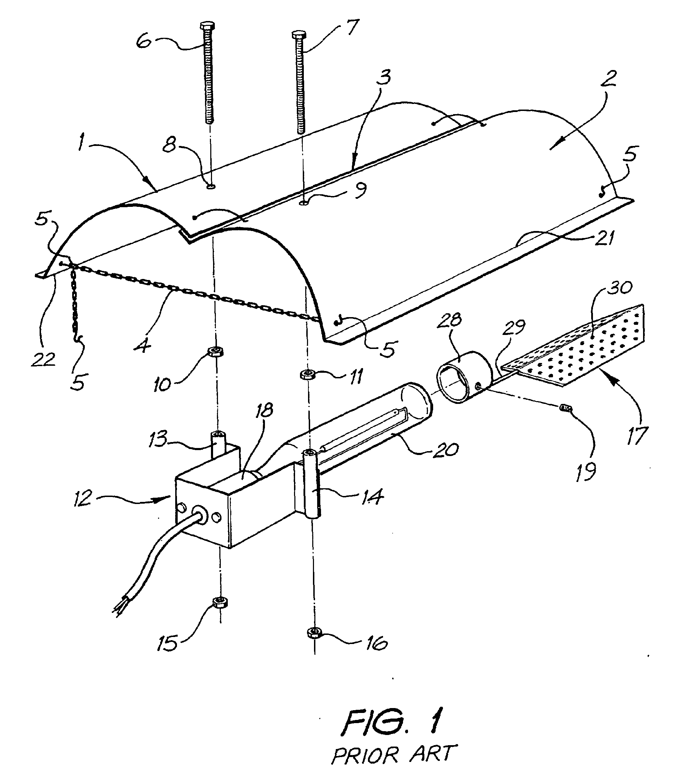

As seen in Fig 1, a prior art luminaire 1 has a double parabolic reflector 2 the reflecting properties of which may be adjusted by means of two chains 4 (only one of which is illustrated in Fig 1) and hooks 5. The luminaire 1 is provided with an elongate lamp 20.

The luminaire 1 is provided with a heat shield 17 in the form of a strip of metal having a substantially v-shape when viewed in cross-section and being provided with a large number of perforations 30 spread over its surface in a substantially regular pattern. The heat shield 17 is supported by means of a collar 28 which is joined to the heat shield 17 by means of an arm 29. The collar 28 is secured to the base 18 of the lamp 20 by means of a grub screw 19.

Whilst the heat shield 17 of Fig 1 is an improvement over a luminaire having no heat shield, as will be explained hereafter, it deflects light and heat in two directions only and therefore its efficiency can be improved.

In accordance with the preferred embodiment the present invention such an improvement is achieved by the heat shield 27 of Fig 2 (in which like parts to the arrangement of Fig 1 are given like numbers). The heat shield 27 is provided with four sloping surfaces 26 each of which is provided with perforations 30 as before. The arm 29 which supports the heat shield 27 is provided with a T-shaped head 31 which cooperates with a C-shaped clamp 38. The clamp 38 permits the heat shield 27 to be mounted onto the lamp base 18, the necessary fasteners being omitted from Fig 2.

The heat shield 27 is shaped like the roof of a house having a hipped ridge 32 which is preferably curved rather than being a sharp crease.

Although the heat shield 27 of Fig 2 is able to be mounted on the luminaire 1 of Fig 1 in place of the heat shield 17, as indicated in Fig 3 the heat shield 27 is also able to be mounted on other types of luminaire such as luminaire 11 having a fixed focus reflector 12. It will be appreciated that in Fig 3 also the mounting fasteners are not illustrated.

Turning now to Fig 4, if the luminaire 2 and lamp 20 as illustrated in Fig 1 (but without the heat shield 17) are placed above, and longitudinally aligned with, a row of flowers 35, or other such delicate plants, then the plants 35 wilt due to excessive heat - as schematically indicated in Fig 4.

If, however, the heat shield 17 is installed as indicated in Figs 5 and 6, then those flowers 35 which are directly under the heat shield 17 receive some illumination as indicated by broken rays in Fig 5 but are shielded because the heat produced by the lamp 20 is deflected in opposite directions transverse to the row of plants 35. The plants 35 grow in a pipe 36 and the lamps 20 are aligned with the pipe 36.

Thus, as schematically indicated in Fig 6, only some of the plants 35 receive the maximum allowed light and grow tall whilst the others receive less light and are short. The result is plants 35 of uneven height. Alternatively, if the height of the lamps 20 above the pipe 36 in which the plants 35 grow is adjusted, the plants 35 between the lamps 20 can receive the desired maximum light but then the plants 35 directly under the lamps 20 will be wilted. Irrespective of the selected height of the lamps 20 above the pipe 36, the result will be non-uniform growth in the direction of the pipe 36. This non-uniformity arises because the elongate light source within the lamp 20 has almost no emissions radiating towards either end of the lamp. Instead substantially all emissions are directed radially from the longitudinal axis of the lamp.

In Fig 7, a hydroponic installation in accordance with a preferred embodiment is schematically illustrated in side elevation, a multiplicity of plants 35 being grown from a single pipe or tube 36 above which is located a sequence of lamps 20 each with heat shields 27 and reflectors 2, 12, etc as desired.

It will be seen from Fig 7 that the sloping surfaces 26 at the ends of the heat shields 27 deflect light and heat away from the direction initially created by the lamps 20. This thereby protects all the plants 35 in the row from too great an intensity of heat. In addition, the plants 35 between the lamps 20 receive more light than in Fig 6, and grow to substantially the same height as the plants 35 under the lamps 20.

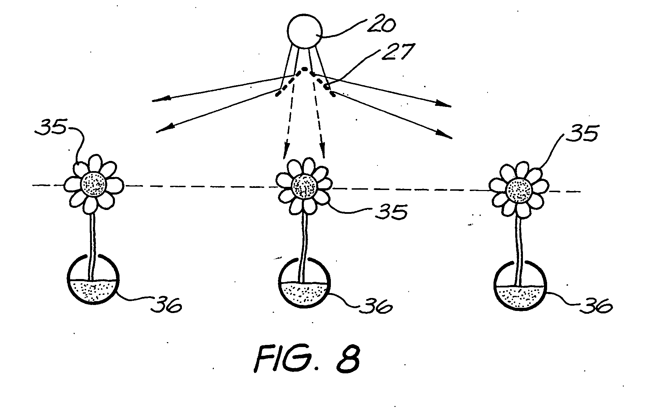

A number of pipes 36 are arranged in the hydroponic installation and spaced apart so as to extend substantially parallel to each other and generally parallel to the line of lamps 20 as indicated in Fig 6. As seen in Fig 8, those pipes 36 not directly under the lamps 20 and thus spaced at a distance from the lamps 20, receive side ways reflections from the heat shield 27. Thus these pipes 36 grow plants 35 of substantially uniform height also since the overall radiation intensity is more uniform than in the prior art. This is because approximately 50% of the emissions are redirected by the reflector 2, 12 (ie. those emitted upwardly) and the remaining 50% of downwardly emitted emissions are re-directed in four directions by the heat shield 27.

The heat shield 27 is provided with rounded, rather than sharp, corners or ridges to produce a smearing of reflected light and heat intensities.

The foregoing describes only one embodiment of the present invention and modifications, obvious to those skilled in the art, can be made thereto, without departing from the scope of the present invention as disclosed in the appended claims. For example, the heat shield 27 can be supported by a pair of arms rather than a single arm 29 as illustrated.

The term "comprising" as used herein is used in the inclusive sense of "having" or "including" and not in the exclusive sense of "consisting only of

## Claims

1. A heat shield for an elongate luminaire (11) having an elongate reflector (12) closely adjacent to which an aligned light and heat emitting source (20) is mounted, said heat shield (27)
- having mounting means (29,31,38) to mount same closely adjacent to said source (20);
- being elongate;
- being aligned with said reflector (12) and said source (20);
- being substantially V-shaped in transverse cross-section;
- and being perforated to deflect only some of the emissions of said source (20),
**characterised in that** said heat shield (27)
- has an axial length which is shorter than the axial length of said reflector (12);
- and has two end surfaces (26) inclined towards each other and located at opposite axial ends of said shield whereby said heat shield redirects some only of said emissions in four directions and an illuminated object (35) aligned with said reflector (12), source (20) and said heat shield (27) is partially shielded from the emissions of said source (20).

2. The heat shield as claimed in claim 1 wherein said four directions comprise first and second opposite directions substantially aligned with said axial length and third and fourth opposite directions substantially transverse with said axial length.

3. The heat shield as claimed in claim 1 or 2 wherein said V-shaped shield is formed with a curved ridge (32).

4. The heat shield as claimed in claim 3 and having the configuration of a single ridged hipped roof (27).

5. A plurality of aligned elongate luminaires (1, 11) each having an elongate reflector (2, 12) and each having an elongate light and heat emitting source (20) which is mounted closely adjacent to, and aligned with, the corresponding reflector, **characterised in that** each of said luminaires has a heat shield (27) as claimed in claim 1 aligned with the corresponding reflector and source whereby illuminated objects (35) aligned with a pair of said luminaires and located intermediate each luminaire of said pair, receive re-directed emissions from the adjacent ones of said end surfaces (26).

6. The plurality of luminaires as claimed in claim 5 wherein said illuminated objects are arranged in rows each of which is substantially parallel to said aligned elongate luminaries.

7. The plurality of luminaries as claimed in claim 6 wherein one of said rows is located directly beneath said aligned elongate luminaires.

8. The plurality of luminaires as claimed in claim 6 or 7 wherein the emissions received by all said illuminated objects are substantially uniform.

9. A method of substantially uniformly illuminating objects (35) grown in at least one row, said method comprising the steps of aligning a plurality of elongate luminaires (1, 11) each having an elongate reflector (2, 12) and each having an elongate light and heat emitting source (20) which is mounted closely adjacent to, and aligned with, the corresponding reflector, and positioning said aligned luminaires above said one row, **characterised in that** each of said luminaires has a heat shield (27) as claimed in claim 1 aligned with the corresponding reflector and source whereby said illuminated objects intermediate the luminaires of each pair of said luminaires receive re-directed emissions from the adjacent ones of said end surfaces (26).

10. The method as claimed in claim 9 including the steps of arranging said illuminated objects in a plurality of substantially parallel rows with said one row being substantially centrally located within said rows.

## Patentansprüche

1. Hitzeschild für eine längliche Leuchte (11) mit einer länglichen Reflektoreinrichtung (12), wobei nahe benachbart hierzu eine ausgerichtete Licht- und Wärme-emittierende Quelle (20) angebracht ist, wobei das Hitzeschild (27)
- Anbringungsmittel (29, 31, 38) zum Anbringen von diesem in naher Nachbarschaft zu der Quelle (20) aufweist;
- länglich ist;
- mit der Reflektoreinrichtung (12) und der Quelle (20) ausgerichtet ist;
- im Wesentlichen V-förmig im transversalen Querschnitt ist;
- und perforiert ist, um lediglich einige der Emissionen der Quelle (20) abzulenken;
**dadurch gekennzeichnet, dass** das Hitzeschild (27)
- eine Axiallänge aufweist, die kürzer als die Axiallänge der Reflektoreinrichtung (12) ist;
- und zwei Endflächen (26) aufweist, die zueinander geneigt sind und bei entgegengesetzten axialen Enden des Schilds angeordnet sind, wodurch das Hitzeschild lediglich einige der Emissionen in vier Richtungen umleitet und ein beleuchtetes Objekt (35), das mit der Reflektoreinrichtung (12), der Quelle (20) und dem Hitzeschild (27) ausgerichtet ist, ist teilweise von den Emissionen der Quelle (20) abgeschirmt.

2. Hitzeschild nach Anspruch 1, worin die vier Richtungen umfassen, eine erste und zweite entgegengesetzte Richtung, die im Wesentlichen mit der Axiallänge ausgerichtet sind, und eine dritte und vierte entgegengesetzte Richtung, die im Wesentlichen quer zu der Axiallänge verläuft.

3. Hitzeschild nach Anspruch 1 oder 2, worin das V-förmige Schild mit einem gekrümmten Grat (32) gebildet ist.

4. Hitzeschild nach Anspruch 3, und das die Konfiguration eines einzelnen zweihängigen bzw. mit First versehenen gewalmten Daches (27) aufweist.

5. Mehrere ausgerichtete, längliche Leuchten (1, 11), die jeweils eine längliche Reflektoreinrichtung (2, 12) aufweisen und jeweils eine längliche Licht- und Wärme-emittierende Quelle (20) aufweisen, die nahe benachbart zu der entsprechenden Reflektoreinrichtung angebracht und mit dieser ausgerichtet ist, **dadurch gekennzeichnet, dass** jede der Leuchten aufweist, ein Hitzeschild (27) nach Anspruch 1, das mit der entsprechenden Reflektoreinrichtung und Quelle ausgerichtet ist, wodurch beleuchtete Objekte (35), die mit einem Paar der Leuchten ausgerichtet sind und zwischen jeder Leuchte des Paares angeordnet sind, umgeleitete Emissionen von den Benachbarten der Endflächen (26) empfangen.

6. Mehrere Leuchten nach Anspruch 5, worin die beleuchteten Objekte in Reihen angeordnet sind, von denen jede im Wesentlichen parallel zu den ausgerichteten länglichen Leuchten verläuft.

7. Mehrere Leuchten nach Anspruch 6, worin eine der Reihen direkt unter den ausgerichteten länglichen Leuchten angeordnet ist.

8. Mehrere Leuchten nach Anspruch 6 oder 7, worin die Emissionen, die durch alle die beleuchteten Objekte empfangen werden, im Wesentlichen gleichförmig sind.

9. Verfahren zum im Wesentlichen gleichförmigen Beleuchten von Objekten (35), die in mindestens einer Reihe angeordnet sind, wobei das Verfahren umfasst, die Schritte eines Ausrichtens mehrerer länglicher Leuchten (1, 11), die jeweils eine längliche Reflektoreinrichtung (2, 12) aufweisen und jeweils eine längliche Licht- und Wärme-emittierende Quelle (20) aufweisen, die nahe benachbart zu der entsprechenden Reflektoreinrichtung angebracht und mit dieser ausgerichtet ist, und eines Positionierens der ausgerichteten Leuchten über der einen Reihe, **dadurch gekennzeichnet, dass** jede der Leuchten aufweist, ein Hitzeschild (27) nach Anspruch 1, das mit der entsprechenden Reflektoreinrichtung und Quelle ausgerichtet ist, wodurch die beleuchteten Objekte zwischen den Leuchten von jedem Paar der Leuchten umgeleitete Emissionen von den Benachbarten der Endflächen (26) empfangen.

10. Verfahren nach Anspruch 9, welches umfasst, die Schritte eines Anordnens der beleuchteten Objekte in mehreren im Wesentlichen parallelen Reihen, wobei die eine Reihe im Wesentlichen zentral in den Reihen angeordnet ist.

## Revendications

1. Écran thermique pour un luminaire allongé (11) ayant un réflecteur allongé (12) étroitement adjacent sur lequel est montée une source d'émission de chaleur et de lumière alignée (20), ledit écran thermique (27) :
- ayant des moyens de montage (29, 31, 38) pour monter le même système étroitement adjacent à ladite source (20) ;
- étant allongé ;
- étant aligné avec ledit réflecteur (12) et ladite source (20) ;
- étant sensiblement en forme de V en coupe transversale ;
- et étant perforé afin de dévier uniquement certaines des émissions de ladite source (20),
**caractérisé en ce que** ledit écran thermique (27) :
- comporte une longueur axiale qui est plus courte que la longueur axiale dudit réflecteur (12) ;
- et a deux surfaces d'extrémité (26) inclinées les unes vers les autres et situées à des extrémités axiales opposées dudit écran, de sorte que ledit écran thermique redirige uniquement certaines desdites émissions dans quatre directions et un objet illuminé (35) aligné avec ledit réflecteur (12), la source (20) et ledit écran thermique (27) est partiellement protégé contre les émissions de ladite source (20).

2. Écran thermique selon la revendication 1, dans lequel lesdites quatre directions comprennent les première et deuxième directions opposées sensiblement alignées avec ladite longueur axiale et la troisième et la quatrième directions opposées sensiblement transversales avec ladite longueur axiale.

3. Écran thermique selon la revendication 1 ou 2, dans lequel ledit écran en forme de V est formé par une arête incurvée (32).

4. Écran thermique selon la revendication 3 et ayant la configuration d'une seule toiture en croupe (27).

5. Pluralité de luminaires allongés alignés (1, 11), chacun ayant un réflecteur allongé (2, 12) et chacun ayant une source d'émission de chaleur et de lumière allongée (20) qui est montée étroitement adjacente à, et alignée avec, le réflecteur correspondant, **caractérisée en ce que** chacun desdits luminaires a un écran thermique (27) selon la revendication 1 aligné avec le réflecteur correspondant et la source, de sorte que les objets illuminés (35) alignés avec une paire desdits luminaires et situés de façon intermédiaire par rapport à chaque luminaire de ladite paire, reçoivent des émissions redirigées depuis celles adjacentes desdites surfaces d'extrémité (26).

6. Pluralité de luminaires selon la revendication 5, dans laquelle lesdits objets illuminés sont agencés en rangée, chacun d'entre eux étant sensiblement parallèle auxdits luminaires allongés alignés.

7. Pluralité de luminaires selon la revendication 6, dans laquelle l'une desdites rangées est située directement en dessous desdits luminaires allongés alignés.

8. Pluralité de luminaires selon la revendication 6 ou 7, dans laquelle les émissions reçues par tous lesdits objets illuminés sont sensiblement uniformes.

9. Procédé d'illumination sensiblement uniforme d'objets (35) grossis dans au moins une rangée, ledit procédé comprenant les étapes d'alignement d'une pluralité de luminaires allongés (1, 11), chacun ayant un réflecteur allongé (2, 12) et chacun ayant une source d'émission de chaleur et de lumière allongée (20) qui est montée étroitement adjacente à, et alignée avec, le réflecteur correspondant, et positionnant lesdits luminaires alignés au-dessus de ladite une rangée, **caractérisé en ce que** chacun desdits luminaires comporte un écran thermique (27) selon la revendication 1 aligné avec le réflecteur correspondant et la source, de sorte que lesdits objets illuminés situés de façon intermédiaire par rapport aux luminaires de chaque paire desdits luminaires reçoivent des émissions redirigées depuis celles adjacentes desdites surfaces d'extrémité (26).

10. Procédé selon la revendication 9 comprenant les étapes consistant à agencer lesdits objets illuminés dans une pluralité de rangées sensiblement parallèles avec ladite une rangée étant sensiblement située centralement à l'intérieur desdites rangées.
